# EUROPEAN PATENT APPLICATION

(11) **EP 4 086 984 A1**
(43) Date of publication of application: **09.11.2022**
(21) Application number: 21879344.6
(22) Date of filing: 11.10.2021
(51) Int. Cl.: H01M 4/505, H01M 4/525, H01M 4/36, H01M 4/485, H01M 4/62, H01M 4/131, H01M 10/0525

(54) **POSITIVE ELECTRODE MATERIAL, PREPARATION METHOD THEREFOR, AND LITHIUM ION SECONDARY BATTERY**

(30) Priority: 12.10.2020 CN 202011094936
(71) Applicant: BTR NANO TECH CO., LTD, Shenzhen, Guangdong 518106 (CN)
(72) Inventor: SONG, Xiong, Shenzhen, Guangdong 518106 (CN); ZHANG, Hongxu, Shenzhen, Guangdong 518106 (CN); LUO, Liang, Shenzhen, Guangdong 518106 (CN); YANG, Shunyi, Shenzhen, Guangdong 518106 (CN); YANG, Caide, Shenzhen, Guangdong 518106 (CN); HUANG, Youyuan, Shenzhen, Guangdong 518106 (CN)
(74) Representative: Long, Giorgio
(86) International application number: PCT/CN2021/123122
(87) International publication number: WO 2022/078300

(57) **Abstract**

The present application relates to the field of positive electrode materials, and provides a positive electrode material, a preparation method thereof, and a lithium-ion secondary battery. The positive electrode material comprises secondary particles and a coating layer, wherein the secondary particles comprise a plurality of primary particles, the primary particles comprise an active substance, the general chemical formula of the active substance is Li_{b}NiₓCo_{y}M_{z}N_{w}O₂, wherein 0.95≤b≤1.05, 0.8≤x<1, 0<y+z≤0.2, x+y+z=1, and 0.0001≤w≤0.003; M is selected from at least one of Mn and Al; N is a metal; and the coating layer comprises a first coating layer and a second coating layer, the first coating layer is formed on the surface of the primary particle, the second coating layer is formed on the surface of the secondary particle, and the first coating layer and the second coating layer both contain a phosphoric acid compound. The positive electrode material, the preparation method therefor and the lithium ion secondary battery, which are provided in the present application, have low costs, can be used for large-scale production, and effectively improve the rate capability and the cycle stability of the lithium battery.

## Description

The present disclosure claims the priority to the Chinese patent application filed with the Chinese Patent Office on October 12, 2020 with the filing No. 2020110949367, and entitled "High-Nickel Cathode Material and Preparation Method thereof, and Lithium-ion Secondary Battery", all the contents of which are incorporated herein by reference.

### Technical Field

The present disclosure relates to the technical field of cathode materials, and particularly to a cathode material (or a positive electrode material) and a preparation method thereof as well as a lithium-ion secondary battery.

### Background Art

Lithium-ion batteries are widely adopted in electric vehicles and consumer electronic products because of advantages of high energy density, high output power, long cycle life, and low environmental pollution and the like. How to improve the rate performance, the thermal stability, and the cycle stability of lithium batteries has always been an exploration direction of research and development personnel.

After a long-term cycle, existing cathode materials undergo particle cracking, which makes the inner structure thereof easy to be directly exposed, affects the long-term cycle stability of the cathode materials, and affects the rate performance of lithium batteries.

On this basis, there is an urgent need to develop a cathode material, so as to improve the rate performance and the cycle stability of lithium batteries.

### Summary

In view of this, the present disclosure proposes a cathode material and a preparation method thereof as well as a lithium-ion secondary battery, wherein the rate performance and the cycle stability of lithium batteries can be effectively improved and the production costs can be reduced.

An embodiment of the present disclosure provides a cathode material, which comprises a secondary particle comprising a plurality of primary particles, wherein the primary particles contain an active substance having a chemical general formula of Li_{b}NiₓCo_{y}M_{z}N_{w}O₂, where 0.95≤b≤1.05, 0.8≤x<1, 0<y+z≤0.2, x+y+z=1, and 0.0001≤w≤0.003; M is selected from at least one of Mn and Al; and N is a metal; and
a coating layer, which comprises a first coating layer and a second coating layer, wherein the first coating layer is formed on the surface of the primary particles, the second coating layer is formed on the surface of the secondary particles, and both the first coating layer and the second coating layer contain a phosphate compound.

In a feasible embodiment, the N in Li_{b}NiₓCo_{y}M_{z}N_{w}O₂ comprises at least one of Co, Mn, Al, Ti, Zr, Sr, Mg, Y, Ba, Cu, W, Nb, La, Ce, Mo, and Sn.

In a feasible embodiment, the secondary particles are spherical or quasi-spherical.

In a feasible embodiment, the average particle size of the primary particles ranges from 200 nm to 800 nm.

In a feasible embodiment, the average particle size of the secondary particles ranges from 9 µm to 15 µm.

In a feasible embodiment, the cathode material meets at least one of following conditions a to g:
a: the phosphate compound comprises at least one of Li₃PO₄ and LiNₖ(PO₄)ᵣ, where O<k≤2, 0<r≤2, and N comprises at least one of Co, Mn, Al, Ti, Zr, Sr, Mg, Y, Ba, Cu, W, Nb, La, Ce, Mo, and Sn;
b: the phosphate compound comprises at least one of LiMgPO₄, LiSrPO₄, LiAlₖ(PO₄)ᵣ, LiCoₖ(PO₄)ᵣ, and LiZrₖ(PO₄)ᵣ;
c: raw materials for preparing the phosphate compound of the first coating layer comprise a metal phosphate and a lithium compound;
d: raw materials for preparing the phosphate compound of the first coating layer comprise a metal phosphate and a lithium compound, and the metal phosphate comprises at least one of Mg₃(PO₄)₂, Sr₃(PO₄)₂, AlPO₄, and Zr₃(PO₄)₄;
e: raw materials for preparing the phosphate compound of the first coating layer comprise a metal phosphate and a lithium compound, and the lithium compound comprises at least one of lithium carbonate, lithium hydroxide, lithium acetate, lithium nitrate, and lithium oxalate;
f: raw materials for preparing the phosphate compound of the second coating layer comprise hydrophosphate; and
g: raw materials for preparing the phosphate compound of the second coating layer comprise hydrophosphate, and the hydrophosphate comprises at least one of SrHPO₄, Zr(HPO₄)₂, MgHPO₄, and Al(H₂PO₄)₃.

In a feasible embodiment, the cathode material meets at least one of following conditions a to g:
a: the phosphate radical content of the phosphate compound in the first coating layer amounts to 0.03 wt% to 0.3 wt% of the total mass of the cathode material before primary coating;
b: the phosphate radical content of the phosphate compound in the second coating layer amounts to 0.1 wt% to 0.7 wt% of the total mass of the cathode material before secondary coating;
c: the content of crystallized phosphate radicals of the phosphate compound in the first coating layer or in the second coating layer amounts to 5 wt% to 50 wt% of the total mass of the phosphate radicals;
d: the first coating layer has a thickness ranging from 0.005 µm to 0.05 µm;
e: the second coating layer has a thickness ranging from 0.02 µm to 0.2 µm;
f: the cathode material has a powder conductivity greater than 0.02 S/cm under the pressurization of 4 kN/cm²; and
g: the cathode material has a specific surface area ranging from 0.2 m²/g to 1.5 m²/g.

In a feasible embodiment, taking the mass of the cathode material as 100%, the phosphate radical content in the first coating layer ranges from 0.03 wt% to 0.3 wt%.

In a feasible embodiment, taking the mass of the cathode material as 100%, the phosphate radical content in the second coating layer ranges from 0.3 wt% to 0.5 wt%.

In a second aspect, an embodiment of the present disclosure further provides a preparation method for a cathode material, the method comprising following steps of:
performing first sintering on a first mixture to obtain a first sinter material, wherein the first mixture comprises at least one of NiₓCo_{y}M_{z} oxide and NiₓCo_{y}M_{z} hydroxide, a lithium compound, and a metal phosphate, where x+y+z=1, M is selected from at least one of Mn or Al, and the first sinter material comprises a plurality of primary particles and a first coating layer formed on the surface of the primary particles, and the first coating layer contains a phosphate compound; and
mixing the first sinter material with hydrophosphate to obtain a second mixture, and performing secondary sintering on the second mixture so as to obtain a cathode material, wherein the cathode material comprises secondary particles and a second coating layer formed on the surface of the secondary particles, with the secondary particle comprising a plurality of accumulated primary particles and the second coating layer containing a phosphate compound.

In a feasible embodiment, the method meets at least one of following conditions a to g:
a: the lithium compound has an additive amount such that the ratio of the total molar content of Ni, Co, and M to the molar content of Li is 1:(0.95 to 1.05);
b: the lithium compound comprises at least one of lithium carbonate, lithium hydroxide, lithium acetate, lithium nitrate, and lithium oxalate;
c: the average particle size of the metal phosphate is smaller than 0.5 µm;
d: the metallic element of the metal phosphate is selected from at least one of Co, Mn, Al, Ti, Zr, Sr, Mg, Y, Ba, Cu, W, Nb, La, Ce, Mo, and Sn;
e: the hydrophosphate comprises at least one of A₂HPO₄ and AH₂PO₄, wherein A is selected from at least one of Ni, Co, Mn, Al, Na, K, Ca, NH₄, Ti, Zr, Sr, Mg, Fe, Li, Y, Ba, Cu, W, Nb, La, Ce, Mo, and Sn;
f: the phosphate radical content in the metal phosphate amounts to 0.03 wt% to 0.3 wt% of the total mass of the first mixture; and
g: the phosphate radical content in the hydrophosphate amounts to 0.1 wt% to 0.7 wt% of the total mass of the second mixture.

In a feasible embodiment, the method meets at least one of following conditions a to i:
a: the metal phosphate comprises at least one of Mg₃(PO₄)₂, Sr₃(PO₄)₂, AlPO₄, and Zr₃(PO₄)₄;
b: the hydrophosphate comprises at least one of SrHPO₄, Zr(HPO₄)₂, MgHPO₄, and Al(H₂PO₄)₃;
c: the phosphate compound at least comprises at least one of Li₃PO₄ and LiNₖ(PO₄)ᵣ,where O<k≤2, 0<r≤2, and N is selected from at least one of Co, Mn, Al, Ti, Zr, Sr, Mg, Y, Ba, Cu, W, Nb, La, Ce, Mo, and Sn;
d: the phosphate compound comprises at least one of LiMgPO₄, LiSrPO₄, LiAlₖ(PO₄)ᵣ, LiCoₖ(PO₄)ᵣ, and LiZrₖ(PO₄)ᵣ;
e: the content of crystallized phosphate radicals of the phosphate compound in the first coating layer or in the second coating layer amounts to 5 wt% to 50 wt% of the total mass of the phosphate radicals;
f: the average particle size of the primary particles ranges from 200 nm to 800 nm;
g: the first coating layer has a thickness ranging from 0.005 µm to 0.05 µm;
h: the average particle size of the secondary particles ranges from 9 µm to 15 µm; and
i: the second coating layer has a thickness ranging from 0.02 to 0.2 µm.

In a feasible embodiment, the first mixture is prepared by using following method:
mixing at least one of NiₓCo_{y}M_{z} oxide and NiₓCo_{y}M_{z} hydroxide, a lithium compound, and a metal phosphate in a solid phase at 10°C to 50°C for 0.3 h to 2 h.

In a feasible embodiment, the method meets at least one of following conditions a to d:
a: the first sintering is performed in an oxygen-containing atmosphere;
b: the first sintering is performed in an oxygen-containing atmosphere, and the oxygen content of the oxygen-containing atmosphere for the first sintering is greater than or equal to 95%;
c: the temperature for the first sintering ranges from 650°C to 850°C; and
d: the first sintering lasts for 6h to 20 h.

In a feasible embodiment, the method meets at least one of following conditions a to f:
a: the temperature for mixing the first sinter material with the hydrophosphate ranges from 10°C to 50°C;
b: the mixing of the first sinter with the hydrophosphate lasts for 0.3 h to 2 h;
c: the secondary sintering is performed in an oxygen-containing atmosphere;
d: the secondary sintering is performed in an oxygen-containing atmosphere, and the oxygen content of the oxygen-containing atmosphere for the secondary sintering is greater than or equal to 95%;
e: the temperature for the secondary sintering ranges from 400°C to 800°C; and
f: the secondary sintering lasts for 5 h to 10 h.

An embodiment of the present disclosure further provides a lithium-ion secondary battery, comprising a cathode material as described above or a cathode material prepared using a preparation method for a cathode material as described above.

The technical solutions of the present disclosure have at least following beneficial effects.

Firstly, the cathode material provided in the present disclosure comprises a secondary particle formed through tight junction of a plurality of primary particles, wherein the primary particle has a first coating layer, the secondary particle has a second coating layer, both the material of the first coating layer and the material of the second coating layer comprise a phosphate compound, and a coating layer of a phosphate compound not only has high lithium-ionic conductivity, but also can reduce the residual alkali on the surface of the cathode material. Such a coating mode of simultaneously coating the inside and the surface is conducive to the formation of a spatial, omnidirectionally isolated electrolyte network and a lithium-ion conductive network. The second coating layer on the surface of the secondary particles can not only protect the surface of the secondary particles from being corroded by the electrolyte and improve the thermal stability, but also can increase the diffusivity of lithium ions and reduce surface residual alkali, such that the obtained cathode material has high rate performance, high thermal stability, good processability and safety. The first coating layer also has the characteristics as mentioned above; besides, the first coating layer can also prevent direct contact of primary particles inside the cathode material with the electrolyte as the secondary particles undergo cracking, and thus inhibit side reactions, which is conducive to the improvement of the structural stability, the thermal stability, and the long-term cycle stability of the secondary particles; in addition, thanks to the formation of a coating layer of phosphate compound having high ionic conductivity at grain boundaries between primary particles, the charge transfer impedance at the grain boundaries is lowered, which is conducive to the increase of the rate performance of the cathode material. Therefore, the structural stability, the thermal stability, the safety, the rate performance, the long-term cycle performance, and the processability of the cathode material are improved collaboratively through such a coating mode having the inside and the outside cooperating with each other.

Secondly, as for the preparation method for a cathode material provided in the present disclosure, the coating of primary particles of the cathode material and the doping of metal cations are carried out during the process of first sintering, and the coating of secondary particles of the cathode material is carried out during the process of secondary sintering; and no water-rinsing treatment during the preparation process of conventional cathode materials is involved in the present method, which means that losses of lattice lithium on the surface of the cathode material can be inhibited in a better way, hereby improving the rate performance and the cycle stability thereof. Moreover, no water-rinsing technology is adopted in the present method, and the water-rinsing step, the drying procedure, and the production of waste water are reduced, while the influence of the water-rinsing process on the consistency of the material quality can be lowered.

The preparation method for a cathode material provided in the present disclosure can not only improve the electrochemical performance of the material, meanwhile, can reduce the production costs and the environmental pollution, and thus is more suitable for mass production. The prepared cathode material can effectively improve the rate performance, the thermal stability, and the cycle stability of lithium batteries.

### Brief Description of Drawings

Fig. 1 shows a process flow diagram of a preparation method for a cathode material provided in an embodiment of the present disclosure;
Figs. 2a and 2b show scanning electron microscope images of the cathode material in Example 1 under different magnifications;
Figs. 3a and 3b show scanning electron microscope images of the cathode material in Comparative Example 1 under different magnifications;
Fig. 4 shows the rate performance diagram of Example 1 and Comparative Example 1 of the present disclosure; and
Fig. 5 shows the differential scanning calorimetric curve (DSC) of Example 1 and Comparative Example 1 of the present disclosure.

### Detailed Description of Embodiments

Following description relates to preferred embodiments of the present disclosure, and it should be pointed out that for a person ordinarily skilled in the art, several improvements and modifications may also be made without departing from the principle of the embodiments of the present disclosure, and these improvements and modifications are also regarded as the scope of protection of the embodiments of the present disclosure.

After a long-term cycle, existing cathode materials undergo particle cracking, which makes the inner structure thereof easy to be directly exposed, affects the long-term cycle stability of the cathode materials, and affects the rate performance of lithium batteries. In order to improve the rate performance and the cycle stability of lithium-ion batteries, an embodiment of the present disclosure provides a cathode material.

The cathode material comprises: a secondary particle comprising a plurality of primary particles, wherein the primary particles contain an active substance having a chemical general formula of Li_{b}NiₓCo_{y}M_{z}N_{w}O₂, where 0.95≤b≤1.05, 0.8≤x<1, 0<y+z≤0.2, x+y+z=1, and 0.0001≤w≤0.003; M is selected from at least one of Mn and Al; N is a metal; and a coating layer, which comprises a first coating layer and a second coating layer, wherein the first coating layer is formed on the surface of the primary particles, the second coating layer is formed on the surface of the secondary particles, and both the first coating layer and the second coating layer contain a phosphate compound.

The cathode material provided in the present disclosure comprises a secondary particle formed through tight binding of a plurality of primary particles, wherein the primary particle has a first coating layer, the secondary particle has a second coating layer, both the material of the first coating layer and the material of the second coating layer comprise a phosphate compound, and a coating layer of a phosphate compound not only has high lithium-ionic conductivity, but also can reduce the residual alkali on the surface of the cathode material. Such a coating mode of simultaneously coating the inside and the surface is conducive to the formation of a spatial, omnidirectionally isolated electrolyte network and a lithium-ion conductive network. The second coating layer on the surface of the secondary particles can not only protect the surface of the secondary particles from being corroded by the electrolyte and improve the thermal stability, but also can increase the diffusivity of lithium ions and reduce surface residual alkali, such that the obtained cathode material has high rate performance, high thermal stability, good processability, and safety. The first coating layer also has the characteristics as mentioned above; besides, the first coating layer can also prevent direct contact of primary particles inside the cathode material with the electrolyte as secondary particles undergo cracking, and inhibit side reactions, which is conducive to the improvement of the structural stability, the thermal stability, and the long-term cycle stability of the secondary particles; in addition, thanks to the formation of a coating layer of phosphate compound having high ionic conductivity at grain boundaries between primary particles, the charge transfer impedance at the grain boundaries is lowered, which is conducive to the increase of the rate performance of the cathode material. Therefore, the structural stability, the thermal stability, the safety, the rate performance, the long-term cycle performance, and the processability of the cathode material are improved synergistically through such a coating mode having the inside and the outside cooperating with each other; moreover, such a structure of dual coating layers can improve the particle strength of the material and inhibit the cracking of the cathode material during the production process of an electrode sheet.

Specifically, the value of b may be, for example, 0.95, 0.98, 1.01, 1.05 or the like. The value of x may be, for example, 0.8, 0.83, 0.88, 0.91, 0.94, 0.98 or the like. The value of y+z may be, for example, 0.02, 0.06, 0.09, 0.12, 0.17, 0.2 or the like, and the value of w may be, for example, 0.0001, 0.0005, 0.0010, 0.0015, 0.0020, 0.0025, 0.0030 or the like. It is not limited here.

Optionally, the N in Li_{b}NiₓCo_{y}M_{z}N_{w}O₂ comprises at least one of Co, Mn, Al, Ti, Zr, Sr, Mg, Y, Ba, Cu, W, Nb, La, Ce, Mo, and Sn.

It shall be clarified that the contents of respective elements in the active substance Li_{b}NiₓCo_{y}M_{z}N_{w}O₂ can be determined through a commonly known instrument for qualitative analysis and/or quantitative analysis of respective elements, such as commonly known ICP, ICP-MS or the like.

The primary particles are individual fine crystal grains, while the secondary particles are particles formed through agglomeration of the primary particles; preferably, the secondary particles are aggregates of the primary particles, and the secondary particles have compact inside and are spherical or quasi-spherical.

After detection of the cathode material provided in the present disclosure through scanning electron microscope (SEM) and particle size measurement, it is obtained that the average particle size D50 of the primary particles of the active substance ranges from 200 nm to 800 nm, and it may be, for example, 200 nm, 300 nm, 400 nm, 500 nm, 600 nm, 700 nm, or 800 nm.

The average particle size of the secondary particles ranges from 9 µm to 15 µm, it may be, for example, 9 µm, 10 µm, 11 µm, 12 µm, 13 µm, 15 µm or the like, and preferably, the average particle size of the secondary particles ranges from 10 µm to 13 µm. It is discovered by the applicant through repeated experiments that by controlling the average particle size of the secondary particles within the range from 9 µm to 15 µm, the problem that the secondary particles undergo cracking during the cycle can be avoided, which is conducive to the improvement of the structural stability, the thermal stability, and the long-term cycle stability of the secondary particles.

In some of the embodiments, the first coating layer has a thickness ranging from 0.005 µm to 0.05 µm, e.g., of 0.005 µm, 0.01 µm, 0.015 µm, 0.02 µm, 0.025 µm, 0.03 µm, 0.035 µm, 0.04 µm, 0.045 µm, or 0.05 µm. The first coating layer may also have a thickness of another value within the above range, which is not limited here.

In some of the embodiments, the second coating layer has a thickness ranging from 0.02 µm to 0.2 µm, e.g., of 0.02 µm, 0.03 µm, 0.05 µm, 0.08 µm, 0.1 µm, 0.13 µm, 0.15 µm, 0.18 µm, or 0.2 µm. The second coating layer may also have a thickness of another value within the above range, which is not limited here.

In some of the embodiments, the phosphate compound comprises at least one of Li₃PO₄ and LiNₖ(PO₄)ᵣ,where O<k≤2, 0<r≤2, and N is selected from at least one of Co, Mn, Al, Ti, Zr, Sr, Mg, Y, Ba, Cu, W, Nb, La, Ce, Mo, and Sn; specifically, the phosphate compound comprises at least one of LiMgPO₄, LiSrPO₄, LiAlₖ(PO₄)r, LiCoₖ(PO₄)r, and LiZrₖ(PO₄)ᵣ; and typical but non-limiting examples for the combination are as follows: the phosphate compound may be a combination of Li₃PO₄ and LiMgPO₄ or a combination of Li₃PO₄ and LiSrPO₄.

This phosphate compound not only has high lithium-ionic conductivity, but also can reduce the residual alkali on the surface of the cathode material. Such a coating mode of simultaneously coating the inside and the surface is conducive to the formation of a spatial, omnidirectionally isolated electrolyte network and a lithium-ion conductive network.

Specifically, raw materials for preparing the phosphate compound of the first coating layer comprise a metal phosphate and a lithium compound, which means it is a phosphate compound formed through the reaction between the metal phosphate and the lithium compound at a high temperature, and it aims to simultaneously perform the coating with the phosphate compound and the doping of metal cations on the primary particles of the cathode material during the sintering process; and the raw materials for preparing the phosphate compound of the second coating layer comprise hydrophosphate; and the phosphate compound is formed from the reaction of the hydrophosphate at a high temperature.

In the above, the phosphate radical content in the first coating layer amounts to 0.03 wt% to 0.3 wt% of the mass of the cathode material before primary coating, and preferably, the phosphate radical content ranges from 0.075 wt% to 0.175 wt%, and may be, for example, 0.075 wt%, 0.1 wt%, 0.125 wt%, 0.15 wt%, or 0.175 wt%.

The phosphate radical content in the second coating layer amounts to 0.1 wt% to 0.7 wt% of the mass of the cathode material before secondary coating, and preferably, the phosphate radical content ranges from 0.3 wt% to 0.5 wt%, and may be, for example, 0.3 wt%, 0.35 wt%, 0.4 wt%, 0.45 wt%, or 0.5 wt%. It is discovered by the applicant through repeated experiments that good coating effect can be achieved for the primary particles or the secondary particles by controlling the phosphate radicals within the above range, without lowering the capacity of the cathode material.

In some embodiments, taking the mass of the cathode material as 100%, the phosphate radical content in the first coating layer ranges from 0.03 wt% to 0.3 wt%.

In some embodiments, taking the mass of the cathode material as 100%, the phosphate radical content in the second coating layer ranges from 0.3 wt% to 0.5 wt%.

It shall be clarified that the primary coating indicates the coating treatment of the cathode material for the first time, and the secondary coating indicates the coating treatment of the cathode material for the second time.

As for the cathode material provided in the present disclosure, the content of crystallized phosphate radicals in a coating layer of phosphate compound amounts to 5 wt% to 50 wt% of the total mass of the phosphate radicals, and may be, for example, 5 wt%, 10 wt%, 20 wt%, 30 wt%, 40 wt%, or 50 wt%. The binding between the coating layer and the surface of the cathode material is enabled to be more stable by controlling the content of crystallized phosphate radicals in the first coating layer within the range from 5 wt% to 50 wt%; moreover, the coating of primary particles can prevent direct contact of primary particles inside the cathode material with the electrolyte as the secondary particles undergo cracking, and inhibit side reactions, which is conducive to the improvement of the structural stability, the thermal stability, and the long-term cycle stability of the secondary particles; meanwhile, due to the formation of a coating layer of phosphate compound having high ionic conductivity at grain boundaries between primary particles, the charge transfer impedance at the grain boundaries is lowered, which is conducive to the increase of the rate performance of the cathode material.

The cathode material is a ternary cathode material, and the powder conductivity of the cathode material under the pressurization of 4 kN/cm² is greater than 0.02 S/cm, which can effectively improve the discharge capacity at a high electric current speed.

The cathode material has a specific surface area ranging from 0.2 m²/g to 1.5 m²/g. Preferably, the cathode material has a specific surface area ranging from 0.3 m²/g to 0.8 m²/g, e.g., of 0.3 m²/g, 0.4 m²/g, 0.5 m²/g, 0.6 m²/g, 0.7 m²/g, 0.8 m²/g or the like. It is discovered by the applicant through repeated experiments that high capacity, high rate performance , and long cycle life can be achieved simultaneously by controlling the specific surface area of the cathode material within 0.2 m²/g to 1.5 m²/g,

The present disclosure further provides a preparation method for a cathode material, the method comprising following steps S100 to S200.

S100: performing a first sintering on a first mixture to obtain a first sinter material, wherein the first mixture comprises at least one of NiₓCo_{y}M_{z} oxide and NiₓCo_{y}M_{z} hydroxide, a lithium compound, and a metal phosphate, where x+y+z=1, and M is selected from at least one of Mn or Al.

In the above, the first sinter material comprises a plurality of primary particles and a first coating layer forming the surface of the primary particles; and the first coating layer contains a phosphate compound. The ingredient of a metal phosphate is added, so as to simultaneously perform the coating of the phosphate compound and the doping of metal cations on the primary particles of the cathode material during the sintering process; and the coating of the primary particles can prevent direct contact of the primary particles inside the cathode material with the electrolyte as the secondary particles undergo cracking, and inhibit side reactions, which is conducive to the improvement of the structural stability, the thermal stability, and the long-term cycle stability of the secondary particles; moreover, thanks to the formation of a coating layer of phosphate compound having high ionic conductivity at grain boundaries between primary particles, the charge transfer impedance at the grain boundaries is lowered, which is conducive to the increase of the rate performance of the cathode material; and the metal cations in the first coating layer may be doped and enter the inside of the cathode material during the coating process, so as to inhibit the transformation of the cathode material from layered structure to rock-salt phase structure,, and inhibit dissolving of metallic ions, while inhibiting the release of lattice oxygen of the material, hereby improving the safety performance of the material.

It further comprises a step of preparing the first mixture, comprising following step:
mixing at least one of NiₓCo_{y}M_{z} oxide and NiₓCo_{y}M_{z} hydroxide, a lithium compound, and a metal phosphate in a solid phase at 10°C to 50°C for 0.3 h to 2 h.

In a specific embodiment, the additive amount of the lithium compound is determined, such that the ratio of the total molar content of Ni, Co, and M to the molar content of Li is 1: (0.95 to 1.05). Within this range, not only the level of Li/Ni cations disordering can be lowered, but also influences on the processability and the safety performance due to too much residual lithium on the surface of the sintered product can be prevented.

Specifically, the lithium compound comprises at least one of lithium carbonate, lithium hydroxide, lithium acetate, lithium nitrate, and lithium oxalate. Preferably, the lithium compound is lithium hydroxide.

The average particle size of the metal phosphate is smaller than 0.5 µm, and may be, for example, 0.001 µm, 0.01 µm, 0.05 µm, 0.1 µm, 0.15 µm, 0.2 µm, 0.25 µm, 0.3 µm, 0.35 µm, 0.4 µm, or 0.45 µm.

The metallic element of the metal phosphate is selected from at least one of Co, Mn, Al, Ti, Zr, Sr, Mg, Y, Ba, Cu, W, Nb, La, Ce, Mo, and Sn. Typical but non-limiting examples of the combination are as follows: the metal phosphate may be at least one of SrHPO₄, Zr(HPO₄)₂, MgHPO₄, and Al(H₂PO₄)₃, and typical but non-limiting examples are as follows: the metal phosphate may be SrHPO₄, or a composition of SrHPO₄ and Zr(HPO₄)₂; and the metal phosphate may also comprise at least one of Mg₃(PO₄)₂, Sr₃(PO₄)₂, AlPO₄ and Zr₃(PO₄)₄, and typical but non-limiting examples are as follows: the metal phosphate may be Mg₃(PO₄)₂, or a composition of AlPO₄ and Zr₃(PO₄)₄.

The phosphate radical content in the metal phosphate amounts to 0.03 wt% to 0.3 wt% of the total mass of the first mixture. For example, it may be 0.03 wt%, 0.05 wt%, 0.1 wt%, 0.15 wt%, 0.2 wt%, 0.3 wt% or the like. Preferably, the phosphate radical content in the metal phosphate amounts to 0.075 wt% to 0.175 wt% of the total mass of the first mixture. It is discovered by the applicant through repeated experiments that good coating effect for the primary particles can be achieved by controlling the phosphate radical content within this range, without lowering the capacity of the cathode material.

During the mixing process of the NiₓCo_{y}M_{z} oxide or the NiₓCo_{y}M_{z} hydroxide, the lithium compound, and the metal phosphate, the mixing lasts for 0.3 h to 2.0 h, and for example, may last for 0.3 h, 0.4 h, 0.5 h, 0.7 h, 0.8 h, 1.0 h, 1.2 h, 1.5 h, 2.0 h or the like, but it is not limited only to the enumerated values, and other unenumerated values within this numerical range are also suitable. The mixing temperature ranges from 10°C to 50°C, and for example, is 10°C, 15°C, 25°C, 30°C, 35°C, 40°C, 45°C, 50°C or the like, and preferably, the mixing temperature ranges from 10°C to 40°C. It is discovered by the applicant through repeated experiments that under this mixing condition, not only sufficient and uniform mixing can be achieved, but side reactions of mixing raw materials caused by a higher temperature can also be prevented.

It shall be clarified that the first sinter is an active substance having a first coating layer, and the active substance has a general formula of Li_{b}NiₓCo_{y}M_{z}N_{w}O₂, where 0.95≤b≤1.05, 0.8≤x<1, 0<y+z≤0.2, x+y+z=1, and 0.0001≤w≤0.003; M is selected from at least one of Mn or Al; and N comprises at least one of Co, Mn, Al, Ti, Zr, Sr, Mg, Y, Ba, Cu, W, Nb, La, Ce, Mo, and Sn.

The first coating layer comprises a phosphate compound, which at least comprises at least one of Li₃PO₄ and LiNₖ(PO₄)ᵣ,where O<k≤2, 0<r≤2, and N is selected from at least one of Co, Mn, Al, Ti, Zr, Sr, Mg, Y, Ba, Cu, W, Nb, La, Ce, Mo, and Sn.

Optionally, the first mixture is subjected to first sintering in an oxygen-containing atmosphere at 650°C-850°C for 6 h to 20 h, and a first sinter material is obtained after pulverization and sieving, wherein the first sinter material comprises a plurality of primary particles, which have a first coating layer.

The average particle size D50 of the primary particles ranges from 200 nm to 800 nm, and it may be, for example, 200 nm, 300 nm, 400 nm, 500 nm, 600 nm, 700 nm, or 800 nm.

In the present embodiment, a first coating layer for the primary particles is formed through the reaction between the metal phosphate and the lithium compound at a high temperature, and the thickness of the first coating layer ranges from 0.005 µm to 0.05 µm and may be, for example, 0.005 µm, 0.01 µm, 0.015 µm, 0.02 µm, 0.025 µm, 0.03 µm, 0.035 µm, 0.04 µm, 0.045 µm, or 0.05 µm. The first coating layer may also have a thickness of another value within the above range, which is not limited here.

The content of crystallized phosphate radicals in the first coating layer amounts to 5 wt% to 50 wt% of the total mass of the phosphate radicals, and may be, for example, 5 wt%, 10 wt%, 15 wt%, 20 wt%, 30 wt%, 40 wt%, or 50 wt%.

The oxygen content in the oxygen-containing atmosphere is ≥ 95%; preferably, the temperature for the first sintering ranges from 720°C to 800°C, and the temperature for the first sintering may be, for example, 720°C, 730°C, 740°C, 750°C, 760°C, 770°C, 780°C, 790°C, 800°C or the like, but is not limited only to the enumerated values, and other unenumerated values within this numerical range are also suitable. It is discovered by the applicant through repeated experiments that sufficient oxygen can promote the oxidation of divalent nickel to trivalent nickel, reduce the Li/Ni cations disordering, and improve the capacity of the cathode material, while this temperature range is conducive to the formation of a lamellar structure, without causing the material to be decomposed.

The first sintering may last, for example, for 6 h, 8 h, 10 h, 12 h, 15 h, 18 h, 20 h or the like, but is not limited only to the enumerated values, and other unenumerated values within this numerical range are also suitable. It is discovered by the applicant through repeated experiments that a lamellar structure and a uniform coating layer for the primary particles can be effectively formed, and accordingly, considerations can be given to various performance indices of the cathode material.

During the first sintering, the control over the particle size of the metal phosphate is conducive to the formation of a uniform first coating layer on the surface of the primary particles, and the binding between the coating layer and the surface of the cathode material is enabled to be more stable by controlling the content of crystallized phosphate radicals in the first coating layer within the range from 5 wt% to 50 wt%; besides, the coating of primary particles can prevent direct contact of primary particles inside the cathode material with the electrolyte as the secondary particles undergo cracking, and inhibit side reactions, which is conducive to the improvement of the structural stability, the thermal stability, and the long-term cycle stability of the secondary particles; meanwhile, due to the formation of a coating layer of phosphate compound having high ionic conductivity at grain boundaries between primary particles, the charge transfer impedance at the grain boundaries is lowered, which is conducive to the increase of the rate performance of the cathode material.

S200: mixing the first sinter material with hydrophosphate for obtaining a second mixture, and performing a secondary sintering on the second mixture so as to obtain a cathode material.

The cathode material comprises secondary particles and a second coating layer forming the surface of the secondary particles, with the secondary particles being aggregates of the primary particles and the second coating layer containing a phosphate compound.

As for the preparation method for a cathode material provided in the present disclosure, the coating of primary particles of the active substance and the doping of metal cations are carried out during the process of sintering for the first time, and the coating of secondary particles of the active substance is carried out during the process of secondary sintering for the second mixture. No water-rinsing treatment during the preparation process of conventional cathode materials is involved in the present method, which means that losses of lattice lithium on the surface of the cathode material can be inhibited in a better way, hereby improving the rate performance and the cycle stability thereof. Moreover, no water-rinsing technology is adopted in the present method, the water-rinsing step, the drying procedure, and the production of waste water are reduced, while the influence of the water-rinsing process on the consistency of the material quality can be lowered.

In some embodiments, during the process for obtaining the second mixture by mixing the first sinter material with the hydrophosphate, the mixing lasts for 0.3 h to 2.0 h, and for example, it may last for 0.3 h, 0.4 h, 0.5 h, 0.7 h, 0.8 h, 1.0 h, 1.2 h, 1.5 h, 2.0 h or the like, but is not limited only to the enumerated values, and other unenumerated values within this numerical range are also suitable. The mixing temperature ranges from 10°C to 50°C, and for example, is 10°C, 15°C, 25°C, 30°C, 35°C, 40°C, 45°C, 50°C or the like, and preferably, the mixing temperature ranges from 10°C to 40°C. It is discovered by the applicant through repeated experiments that under this mixing condition, not only sufficient and uniform mixing can be achieved, but side reactions of mixing raw materials caused by a higher temperature can also be prevented.

In the above, the average particle size of the hydrophosphate is smaller than 10 µm, and may be, for example, 0.01 µm, 0.1 µm, 1 µm, 2 µm, 4 µm, 5 µm, 8 µm, 9 µm or the like, but is not limited only to the enumerated values, and other unenumerated values within this numerical range are also suitable. The hydrophosphate comprises at least one of A₂HPO₄ and AH₂PO₄, wherein A is selected from at least one of Ni, Co, Mn, Al, Na, K, Ca, NH₄, Ti, Zr, Sr, Mg, Fe, Li, Y, Ba, Cu, W, Nb, La, Ce, Mo, and Sn. Typical but non-limiting examples for the combination are as follows: the combination of MgHPO₄ and NH₄H₂PO₄, the combination of (NH₄)₂HPO₄ and Al(H₂PO₄)₃, or the like.

The phosphate radical content in the hydrophosphate amounts to 0.1 wt% to 0.7 wt% of the total mass of the second mixture, and it may be, for example, 0.1 wt%, 0.2 wt%, 0.3 wt%, 0.4 wt%, 0.5 wt%, 0.6 wt%, or 0.7 wt%. Preferably, the phosphate radical content in the hydrophosphate amounts to 0.3 wt% to 0.5 wt% of the total mass of the second mixture. It is discovered by the applicant through repeated experiments that good coating effect for the secondary particles can be achieved by controlling the phosphate radicals within this range, without lowering the capacity of the cathode material.

In specific embodiments, the second mixture is subjected to secondary sintering in an oxygen-containing atmosphere at 400°C-800°C for 5 h to 10 h, and a cathode material is obtained after pulverization and sieving. The cathode material comprises a plurality of secondary particles, which are aggregations of the primary particles.

The average particle size of the secondary particles ranges from 9 µm to 15 µm, and it may be, for example, 9 µm, 10 µm, 11 µm, 12 µm, 13 µm, 15 µm or the like, and preferably, the average particle size of the secondary particles ranges from 10 µm to 13 µm. It is discovered by the applicant through repeated experiments that by controlling the average particle size of the secondary particles within the range from 9 µm to 15 µm, the problem that the secondary particles undergo cracking during the cycle can be avoided, which is conducive to the improvement of the structural stability, the thermal stability, and the long-term cycle stability of the secondary particles.

The second coating layer has a thickness ranging from 0.02 µm to 0.2 µm, e.g., of 0.02 µm, 0.03 µm, 0.05 µm, 0.08 µm, 0.1 µm, 0.13 µm, 0.15 µm, 0.18 µm, or 0.2 µm. The second coating layer may also have a thickness of another value within the above range, which is not limited here. Specifically, the second coating layer is formed through the reaction between the hydrophosphate and the residual lithium on the surface of the first sinter material at a high temperature, and the content of crystallized phosphate radicals in the second coating layer amounts to 5 wt% to 50 wt% of the total mass of the phosphate radicals.

The oxygen content in the oxygen-containing atmosphere for the secondary sintering is ≥ 95%, the temperature for the secondary sintering ranges from 400°C to 800°C, and it may be, for example, 400°C, 500°C, 550°C, 600°C, 650°C, 700°C, 800°C or the like; preferably, the sintering temperature ranges from 500°C to 700°C, but is not limited only to the enumerated values, and other unenumerated values within this numerical range are also suitable. It is discovered by the applicant through repeated experiments that within this range for sintering temperature, the phosphate compound is enabled to be coated on the surface of the first sinter material more uniformly and firmly; meanwhile, it is conducive to the reaction between the hydrophosphate and the residual lithium on the surface of the first sinter material, so as to reduce residual alkali and form a phosphate compound having high lithium-ionic conductivity, and improve the processability and the rate performance, without the decomposition and lithium precipitation of the cathode material.

The secondary sintering lasts for 5 h to 10 h, and it may last, for example, for 5 h, 6 h, 7 h, 8 h, 9 h, 10 h or the like, but is not limited only to the enumerated values, and other unenumerated values within this numerical range are also suitable. It is discovered by the applicant through repeated experiments that a uniform second coating layer and a phosphate compound having high lithium-ionic conductivity can be formed, and accordingly, considerations can be given to various performance indices of the cathode material.

Optionally, the mixing adopted in the present example may be mechanical mixing, such as the use of a high-speed mixer, a VC mixing machine or the like.

As for the cathode material provided in the present disclosure, the active substance thereof has a general formula of Li_{b}NiₓCo_{y}M_{z}N_{w}O₂, where 0.95≤b≤1.05, 0.8≤x<1, 0<y+z≤0.2, x+y+z=1, and 0.0001 ≤w≤0.003; M is selected from at least one of Mn and Al; and N comprises at least one of Co, Mn, Al, Ti, Zr, Sr, Mg, Y, Ba, Cu, W, Nb, La, Ce, Mo, and Sn.

A first coating layer is formed on the surface of the primary particles, a second coating layer is formed on the surface of the secondary particles, both the first coating layer and the second coating layer are made of a phosphate compound, and the phosphate compound at least comprises at least one of Li₃PO₄ and LiNₖ(PO₄)ᵣ,where O<k≤2, 0<r≤2, and N is selected from at least one of Co, Mn, Al, Ti, Zr, Sr, Mg, Y, Ba, Cu, W, Nb, La, Ce, Mo, and Sn.

As for the preparation method for a cathode material provided in the present disclosure, the coating of primary particles of the cathode material and the doping of metal cations are carried out during the process of first sintering, and the coating of secondary particles of the cathode material is carried out during the process of secondary sintering; and no water-rinsing treatment during the preparation process of conventional cathode materials is involved in the present method, which means that losses of surface lattice lithium of the cathode material can be inhibited in a better way, hereby improving the rate performance and the cycle stability thereof. Moreover, the unwashed technology is adopted in the present method, thus the water-rinsing step, the drying procedure, and the production of waste water are reduced, while the influence of the water-rinsing process on the consistency of the material quality can be lowered.

An embodiment of the present disclosure further provides a lithium-ion secondary battery, comprising a cathode material as described above or a cathode material prepared by a preparation method for a cathode material as described above.

The embodiments of the present disclosure will be further described below in terms of multiple examples. In the above, the embodiments of the present disclosure are not limited to the following specific examples. Variations may be appropriately implemented, without departing from the scope of independent claims.

### Example 1

A preparation method for a cathode material comprises following steps:
(1) mixing precursor Ni_{0.88}Co_{0.09}Al_{0.03}(OH)₂, lithium hydroxide, and SrHPO₄ with an average particle size D50 of 0.2 µm uniformly in a high-speed mixer, and obtaining a first mixture by controlling the mixing temperature to 30°C and the mixing duration to 1 h, wherein Li/(Ni+Co+AI)=1.05, and the phosphate radical content amounts to 0.3 wt% of the total mass of the first mixture;
(2) sintering the first mixture at 750°C in an atmosphere having an oxygen content ≥95% for 10 h, and obtaining a first sinter Li_{1.05}Ni_{0.88}Co_{0.09}Al_{0.03}Sr_{0.0026}O₂ coated with a phosphate compound after pulverization and sieving, wherein the first sinter material is doped with Sr;
(3) mixing the above first sinter Li_{1.05}Ni_{0.88}Co_{0.09}Al_{0.03}Sr_{0.0026}O₂ with dihydric phosphate Al(H₂PO₄)₃ uniformly in a high-speed mixer, and obtaining a second mixture by controlling the mixing temperature to 30°C and the mixing duration to 1 h, wherein the phosphate radical content amounts to 0.1 wt% of the total mass of the second mixture; and
(4) sintering the second mixture at 700°C in an atmosphere having an oxygen content ≥95% for 5 h, and obtaining a cathode material Li_{1.05}Ni_{0.88}Co_{0.09}Al_{0.03}Sr_{0.0026}O₂ coated with a phosphate compound after pulverization and sieving.

The cathode material obtained in the present example comprises a plurality of secondary particles, which are aggregates of a plurality of primary particles; and a first coating layer is formed on the surface of the primary particles, and a second coating layer is formed on the surface of the secondary particles. In the above, the average particle size of the primary particles is 0.6 µm, the average particle size of the secondary particles is 12 µm, and the primary particles are made of the material Li_{1.05}Ni_{0.88}Co_{0.09}Al_{0.03}Sr_{0.0026}O₂ the first coating layer has a thickness of 0.04 µm, and the first coating layer is made of the materials Li₃PO₄ and LiSrₖ(PO₄)ᵣ; the second coating layer has a thickness of 0.06 µm; and the second coating layer is made of the materials Li₃PO₄ and LiAlₖ(PO₄)ᵣ.

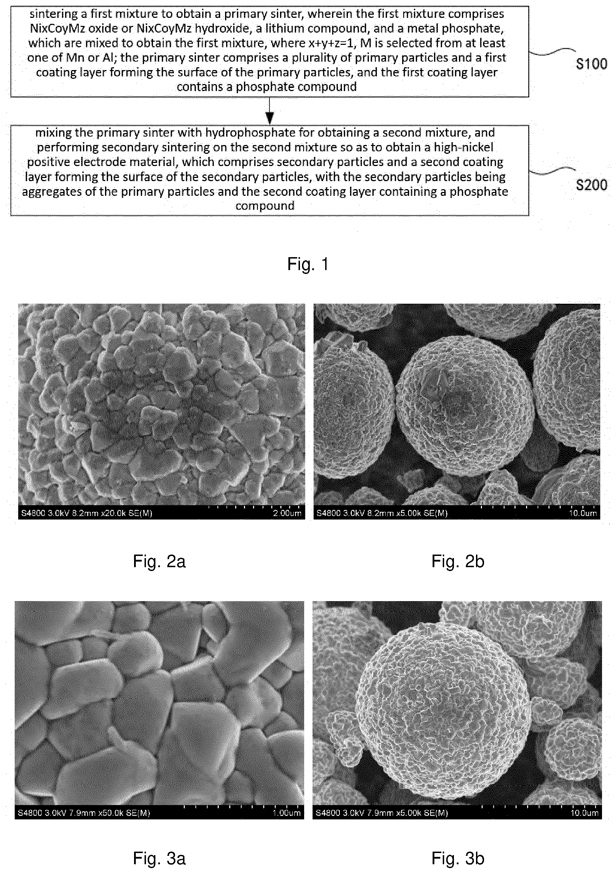

The scanning electron microscope images of the cathode material prepared in Example 1 are shown in Figs. 2a and 2b.

Results of performance tests on the cathode material S1 prepared in Example 1 are shown in Table 1.

### Example 2

(1) Mixing precursor Ni_{0.83}Co_{0.11}Mn_{0.06}(OH)₂, lithium hydroxide, and Zr(HPO₄)₂ with an average particle size D50 of 0.4 µm uniformly in a high-speed mixer, and obtaining a first mixture by controlling the mixing temperature to 25°C and the mixing duration to 2 h, wherein Li/(Ni+Co+AI)=1.03, and the phosphate radical content amounts to 0.2 wt% of the total mass of the first mixture.
(2) Sintering the first mixture at 800°C in an atmosphere having an oxygen content ≥95% for 20 h, and obtaining a first sinter Li_{1.03}Ni_{0.83}Co_{0.11}Mn_{0.06}Zr_{0.0009}O₂ coated with a phosphate compound after pulverization and sieving, wherein the first sinter material is doped with Zr.
(3) Mixing the above first sinter Li_{1.03}Ni_{0.83}Co_{0.11}Mn_{0.06}Zr_{0.0009}O₂ with dihydric phosphate NH₄H₂PO₄ uniformly in a high-speed mixer, and obtaining a second mixture by controlling the mixing temperature to 25°C and the mixing duration to 2 h, wherein the phosphate radical content amounts to 0.3 wt% of the total mass of the second mixture.
(4) Sintering the second mixture at 600°C in an atmosphere having an oxygen content ≥95% for 8 h, and obtaining a cathode material Li_{1.03}Ni_{0.83}Co_{0.11}Mn_{0.06}Zr_{0.0009}O₂ coated with a phosphate compound after pulverization and sieving.

The cathode material obtained in the present example comprises a plurality of secondary particles, which are aggregates of a plurality of primary particles; and a first coating layer is formed on the surface of the primary particles, and a second coating layer is formed on the surface of the secondary particles. In the above, the average particle size of the primary particles is 0.7 µm, the average particle size of the secondary particles is 11.5 µm, and the primary particles are made of the material Li_{1.03}Ni_{0.83}Co_{0.11}Mn_{0.06}Zr_{0.0009}O_{2,} the first coating layer has a thickness of 0.02 µm, and the first coating layer is made of the materials Li₃PO₄ and LiZrₖ(PO₄)ᵣ; the secondary particles are aggregates of the primary particles after being coated with the first coating layer, and the second coating layer has a thickness of 0.10 µm; and the second coating layer is made of the material Li₃PO₄.

Results of performance tests on the cathode material S2 prepared in Example 2 are shown in Table 1.

### Example 3

(1) Mixing precursor Ni_{0.88}Co_{0.09}Al_{0.03}(OH)₂, lithium hydroxide, and MgHPO₄ with an average particle size D50 of 0.05 µm as well as Zr(HPO₄)₂ with a median particle size of 0.4 µm uniformly in a high-speed mixer, and obtaining a first mixture by controlling the mixing temperature to 20°C and the mixing duration to 1.5 h, wherein Li/(Ni+Co+AI)=1.00, and the phosphate radical content amounts to 0.1 wt% of the total mass of the first mixture.
(2) Sintering the first mixture at 650°C in an atmosphere having an oxygen content ≥95% for 20 h, and obtaining a first sinter LiNi_{0.88}Co_{0.09}Al_{0.03}Mg_{0.0009}Zr_{0.0004}O₂ coated with a phosphate compound after pulverization and sieving, wherein the first sinter material is doped with Mg and Zr.
(3) Mixing the above first sinter LiNi_{0.88}Co_{0.09}Al_{0.03}Mg_{0.0009}Zr_{0.0004}O₂ with dihydric phosphate (NH₄)₂HPO₄ uniformly in a high-speed mixer, and obtaining a second mixture by controlling the mixing temperature to 20°C and the mixing duration to 1.5 h, wherein the phosphate radical content amounts to 0.5 wt% of the total mass of the second mixture.
(4) Sintering the second mixture at 500°C in an atmosphere having an oxygen content ≥95% for 10 h, and obtaining a cathode material LiNi_{0.88}Co_{0.09}Al_{0.03}Mg_{0.0009}Zr_{0.0004}O₂ with a phosphate compound simultaneously coating the primary particles and the secondary particles after pulverization and sieving.

The cathode material obtained in the present example comprises a plurality of secondary particles, which are aggregates of a plurality of primary particles; a first coating layer is formed on the surface of the primary particles, and a second coating layer is formed on the surface of the secondary particles; wherein the average particle size of the primary particles is 0.3 µm, the average particle size of the secondary particles is 12 µm, and the primary particles are made of the material LiNi_{0.88}Co_{0.09}Al_{0.03}Mg_{0.0009}Zr_{0.0004}O₂ the first coating layer has a thickness of 0.01 µm, and the first coating layer is made of the materials Li₃PO₄, LiMgₖ(PO₄)ᵣ, and LiZrₖ(PO₄)ᵣ; the secondary particles are aggregates of the primary particles after being coated with the first coating layer, and the second coating layer has a thickness of 0.15 µm; and the second coating layer is made of the material Li₃PO₄.

Results of performance tests on the cathode material S3 prepared in Example 3 are shown in Table 1.

### Example 4

(1) Mixing precursor Ni_{0.88}Co_{0.09}Al_{0.03}(OH)₂, lithium hydroxide, and SrHPO₄ with an average particle size D50 of 0.2 µm uniformly in a high-speed mixer, and obtaining a first mixture by controlling the mixing temperature to 15°C and the mixing duration to 2 h, wherein Li/(Ni+Co+AI)=0.95, and the phosphate radical content amounts to 0.03 wt% of the total mass of the first mixture.
(2) Sintering the first mixture at 730°C in an atmosphere having an oxygen content ≥95% for 6 h, and obtaining a first sinter LiNi_{0.88}Co_{0.09}Al_{0.03}Sr_{0.0003}O₂ coated with a phosphate compound after pulverization and sieving, wherein the first sinter material is doped with Sr.
(3) Mixing the above first sinter LiNi_{0.88}Co_{0.09}Al_{0.03}Sr_{0.0003}O₂ with dihydric phosphate NH₄H₂PO₄ and hydrophosphate Zr(HPO₄)₂ uniformly in a high-speed mixer, and obtaining a second mixture by controlling the mixing temperature to 15°C and the mixing duration to 2 h, wherein the phosphate radical content amounts to 0.7 wt% of the total mass of the second mixture.
(4) Sintering the second mixture at 550°C in an atmosphere having an oxygen content ≥95% for 10 h, and obtaining a cathode material LiNi_{0.88}Co_{0.09}Al_{0.03}Sr_{0.0003}O₂ coated with a phosphate compound after pulverization and sieving.

The cathode material obtained in the present example comprises a plurality of secondary particles, which are aggregates of a plurality of primary particles; a first coating layer is formed on the surface of the primary particles, and a second coating layer is formed on the surface of the secondary particles; wherein the average particle size of the primary particles is 0.5 µm, the average particle size of the secondary particles is 12 µm, the primary particles are made of the material LiNi_{0.88}Co_{0.09}Al_{0.03}Sr_{0.0003}O₂ the first coating layer has a thickness of 0.008 µm, and the first coating layer is made of the materials Li₃PO₄ and LiSrₖ(PO₄)ᵣ; the secondary particles are aggregates of the primary particles after being coated with the first coating layer, and the second coating layer has a thickness of 0.18 µm; and the second coating layer is made of the materials Li₃PO₄ and LiZrₖ(PO₄)ᵣ.

Results of performance tests on the cathode material S4 prepared in Example 4 are shown in Table 1.

### Example 5

The preparation method and the processing steps of Example 1 are adopted here, while the difference between Example 5 and Example 1 lies in that the second mixture was sintered at 400°C in an atmosphere having an oxygen content ≥95% for 8 h.

The cathode material obtained in the present example comprises a plurality of secondary particles, which are aggregates of a plurality of primary particles; and a first coating layer is formed on the surface of the primary particles, and a second coating layer is formed on the surface of the secondary particles. In the above, the average particle size of the primary particles is 0.6 µm, the average particle size of the secondary particles is 12 µm, and the primary particles are made of the material Li_{1.05}Ni_{0.88}Co_{0.09}Al_{0.03}Sr_{0.0026}O₂; the first coating layer has a thickness of 0.04 µm, and the first coating layer is made of the materials Li₃PO₄ and LiSrₖ(PO₄)ᵣ; the secondary particles are aggregates of the primary particles after being coated with the first coating layer, and the second coating layer has a thickness of 0.1 µm; and the second coating layer is made of the materials Li₃PO₄ and LiAlₖ(PO₄)ᵣ.

### Example 6

The preparation method and the processing steps of Example 1 are adopted here, while the difference between Example 6 and Example 1 lies in that Li/(Ni+Co+AI)=0.99.

### Example 7

The preparation method and the processing steps of Example 1 are adopted here, while the difference between Example 7 and Example 1 lies in that Sr₃(PO₄)₂ is used in step (1).

### Comparative Example 1

The preparation method and the processing steps of Example 1 are adopted here, while the differences between Comparative Example 1 and Example 1 lie in that SrHPO₄ is not added in step (1) and Al(H₂PO₄)₃ is not added in step (2).

Results of performance tests on the cathode material D1 prepared in Comparative Example 1 are shown in Table 1.

The scanning electron microscope images of the cathode material prepared in Comparative Example 1 are shown in Figs. 3a and 3b.

### Comparative Example 2

The preparation method and the processing steps of Example 1 are adopted here, while the difference between Comparative Example 2 and Example 1 lies in that Al(H₂PO₄)₃ is not added in step (2).

Results of performance tests on the cathode material D2 prepared in Comparative Example 2 are shown in Table 1.

### Comparative Example 3

The preparation method and the processing steps of Example 1 are adopted here, while the difference between Comparative Example 3 and Example 1 lies in that SrHPO₄ used in step (1) has a median particle size of 10 µm.

Results of performance tests on the cathode material D3 prepared in Comparative Example 3 are shown in Table 1.

### Comparative Example 4

The preparation method and the processing steps of Example 1 are adopted here, but the difference between Comparative Example 4 and Example 1 lies in that Al(H₂PO₄)₃ in step (3) is replaced by AlPO₄, while all other operations and raw material ratios are identical with those in Example 1.

Results of performance tests on the cathode material D4 prepared in Comparative Example 4 are shown in Table 1.

### Test Method

The morphology of cathode materials was analyzed through scanning electron microscope, so as to obtain a scanning electron microscope image thereof.

A button half-cell was used to evaluate the electrochemical performance of prepared cathode materials, and specific method was as follows: the cathode material, SP, and polyvinylidene fluoride (PVDF) were weighed in a mass ratio of 96:2:2, N-methylpyrrolidone was added at a solid content of 50% and then the resultant was turned into a viscous slurry with a high-speed disperser, and the slurry was uniformly coated on an aluminum foil with a scraper, rolled after being dried in an oven at 80°C, and then cut into a cathode sheet having a diameter of 14 mm. A lithium plate having a diameter of 16 mm was used as negative electrode sheet, Celgard polyethylene PP membrane was used as separator, LiPF6 carbonate (DEC/EC volume ratio of 1:1) solution with a concentration of 1 mol/L was used as electrolyte, and assembly was realized in a glove box filled with argon.

The LAND battery testing system was adopted to perform tests regarding the capacity, the initial coulomb efficiency, and the rate performance at 25°C at 3.0 V-4.3 V, wherein the reference capacity was set to 200 mA/g and the current density corresponding to 1C was 200 mA/g.

A potentiometric titrator was adopted to test the total quantity of the lithium compound on the surface of cathode materials, which was specifically titrated through hydrochloric acid and then converted into the quantity of lithium compound through the quantity of consumed hydrochloric acid, so as to calculate the residual alkali content.

Cathode material particles were cut with an ion beam cutter, and then elemental line scan of the section of the cut particles was performed by utilizing a high-precision electron spectrometer, so as to calculate the distribution position of a coating layer of a phosphate compound according to the line-scanning element distribution curve.

A NETZSCH differential scanning calorimeter was adopted to perform thermal stability test on an electrode material in a sealed high-pressure crucible at 5°C/min in a nitrogen atmosphere, hereby obtaining a differential scanning calorimetric curve, wherein the electrode material mentioned above was the active substance scraped from an electrode sheet of a fully charged button cell after 2.5 cycles at 0.1C.

The structural composition of cathode materials was tested with a Bruker X-ray diffractometer, and the content of crystallized phosphate radicals in the phosphate compound of the coating layer was then obtained through refined calculation of the X-ray spectrogram.

The powder conductivity of cathode materials was tested with a high-precision four-probe machine MCP-T700, which can test the conductivity of powder materials under different pressures.

The results of the above performance tests are as follows.

**Table 1. Table of Performance Comparison Results**

| | | | | | | | | | | |
|---|---|---|---|---|---|---|---|---|---|---|
| samples | discharge capacity at 0.1 C mAh/g | initial coulomb efficiency % | discharge capacity at 0.5C mAh/g | discharge capacity at 1C mAh/g | discharge capacity at 2C mAh/g | discharge capacity at 4C mAh/g | discharge capacity at 6C mAh/g | capacity retention ratio after 50 cycles at 1C % | residual alkali content wt% | content of crystallized phosphate radicals % |
| S1 | 210.2 | 90.6 | 199.8 | 197.2 | 193.6 | 187.8 | 180.5 | 97.5 | 0.10 | 46 |
| S2 | 208.5 | 90.8 | 196.8 | 193.0 | 188.4 | 183.1 | 172.9 | 97.7 | 0.09 | 37 |
| S3 | 210.8 | 90.2 | 197.2 | 192.9 | 189.9 | 184.5 | 175.0 | 97.4 | 0.07 | 26 |
| S4 | 208.3 | 89.9 | 195.0 | 190.1 | 183.3 | 176.6 | 171.4 | 98.0 | 0.05 | 19 |
| S5 | 210.5 | 90.7 | 199.9 | 197.9 | 194.0 | 188.1 | 180.9 | 95.6 | 0.12 | 40 |
| S6 | 209.2 | 90.3 | 197.9 | 195.2 | 191.4 | 186.2 | 177.1 | 97.5 | 0.08 | 45 |
| S7 | 209.6 | 90.2 | 198.1 | 194.5 | 191.3 | 186.5 | 178.2 | 97.4 | 0.09 | 44 |
| D1 | 192.8 | 89.6 | 188.0 | 181.2 | 175.6 | 162.3 | 140.3 | 88.1 | 0.40 | / |
| D2 | 200.1 | 87.3 | 189.2 | 183.2 | 176.4 | 162.5 | 148.3 | 90.1 | 0.30 | 62 |
| D3 | 205.4 | 89.8 | 190.2 | 183.5 | 177.8 | 164.5 | 158.4 | 92.3 | 0.15 | 24 |
| D4 | 206.4 | 89.9 | 193.3 | 188.8 | 182.6 | 175.6 | 170.4 | 94.3 | 0.35 | 43 |

As can be seen from Figs. 2a and 2b, as for the cathode material obtained in Example 1, a uniform coating layer is formed on the surface of secondary particles, and the gaps between primary particles are filled with a phosphate compound, such that the contact at grain boundaries is very tight and the coating layer is tightly bound to the cathode material.

As can be seen from Figs. 3a and 3b, the surface of secondary particles of the cathode material obtained in Comparative Example 1 is relatively smooth, and there is no coating layer; meanwhile, there are relatively great gaps between primary particles, and the electrolyte easily penetrates into the interior of the secondary particles.

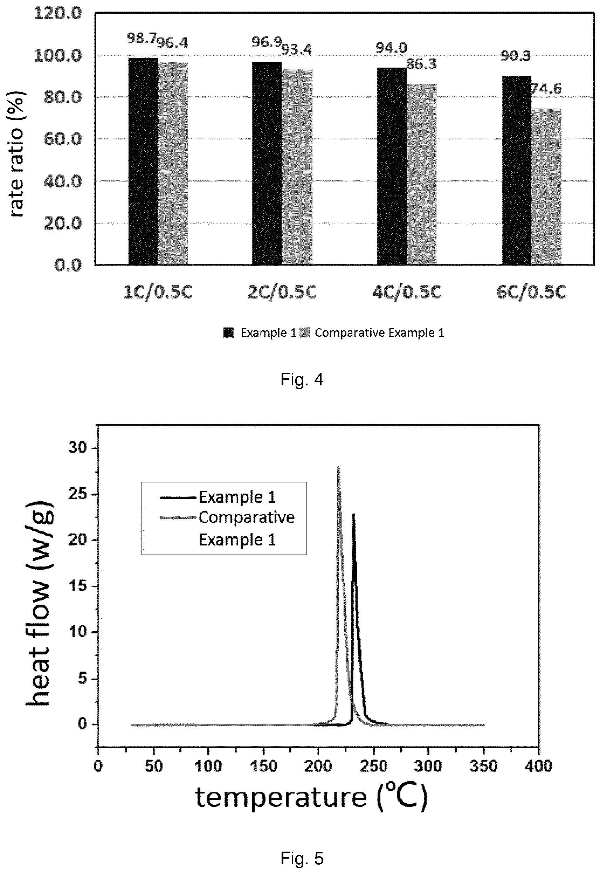

As shown in Fig. 4, the rate performance of the cathode material obtained in Example 1 is better than that of Comparative Example 1, indicating that the rate performance of a cathode material without coating the primary particles with a phosphate compound is significantly worse.

As shown in Fig. 5, the decomposition temperature and the heat release of the corresponding cathode material in Example 1 are better than those in Comparative Example 1, indicating that coating the primary particles and the secondary particles of the cathode material with a phosphate compound is conducive to the increase of the thermal stability of the cathode material.

As can be seen from Table 1, the cathode materials prepared in Examples 1-5 of the present disclosure all have better electrochemical performance, a discharge capacity of greater than 205 mAh/g, an initial coulomb efficiency up to about 90%, good rate performance, outstanding long-term cycle performance, and relatively low surface lithium content.

It can be determined from data comparison between Example 1 and Comparative Example 2 in Table 1 that whether the primary particles or the secondary particles are not coated with a phosphate compound, the prepared cathode material has relatively higher surface residual alkali, and the rate performance, the discharge capacity, and the cycle performance thereof are all greatly affected. It can be determined from data comparison between Example 1 and Comparative Example 3 that the particle size of the metal phosphate (SrHPO₄) is equal to 10 µm, which is too large and is disadvantageous to the formation of a uniform first coating layer on the surface of primary particles with the metal phosphate; and the prepared cathode material has relatively higher surface residual alkali, and the rate performance, the discharge capacity, and the cycle performance thereof are all greatly affected. It can be determined from data comparison between Example 1 and Comparative Example 4 that the obtained cathode material has seriously higher surface residual alkali and thus cannot pass the processability test, when hydrophosphate is not used for the secondary coating.

## Claims

1. A cathode material, **characterized in that** the cathode material comprises:
a secondary particle, comprising a plurality of primary particles, wherein the primary particles contain an active substance having a chemical general formula of Li_{b}NiₓCo_{y}M_{z}N_{w}O₂, where 0.95≤b≤1.05, 0.8≤x<1, 0<y+z≤0.2, x+y+z=1, and 0.0001≤w≤0.003; M is selected from at least one of Mn and Al; and N is a metal; and
a coating layer, which comprises a first coating layer and a second coating layer, wherein the first coating layer is formed on a surface of the primary particles, the second coating layer is formed on a surface of the secondary particle, and both the first coating layer and the second coating layer contain a phosphate compound.

2. The cathode material according to claim 1, wherein N in Li_{b}NiₓCo_{y}M_{z}N_{w}O₂ comprises at least one of Co, Mn, Al, Ti, Zr, Sr, Mg, Y, Ba, Cu, W, Nb, La, Ce, Mo, and Sn.

3. The cathode material according to claim 1 or 2, wherein the cathode material meets at least one of following conditions a to c:
a: the secondary particle is spherical or quasi-spherical;
b: an average particle size of the primary particles ranges from 200 nm to 800 nm; and
c: an average particle size of the secondary particle ranges from 9 µm to 15 µm.

4. The cathode material according to any one of claims 1 to 3, wherein the cathode material meets at least one of following conditions a to g:
a: the phosphate compound comprises at least one of Li₃PO₄ and LiNₖ(PO₄)ᵣ, where O<k≤2, 0<r≤2, and N comprises at least one of Co, Mn, Al, Ti, Zr, Sr, Mg, Y, Ba, Cu, W, Nb, La, Ce, Mo, and Sn;
b: the phosphate compound comprises at least one of LiMgPO₄, LiSrPO₄, LiAlₖ(PO₄)ᵣ, LiCoₖ(PO₄)ᵣ, and LiZrₖ(PO₄)ᵣ;
c: raw materials for preparing the phosphate compound of the first coating layer comprise a metal phosphate and a lithium compound;
d: raw materials for preparing the phosphate compound of the first coating layer comprise a metal phosphate and a lithium compound, and the metal phosphate comprises at least one of Mg₃(PO₄)₂, Sr₃(PO₄)₂, AlPO₄, and Zr₃(PO₄)₄;
e: raw materials for preparing the phosphate compound of the first coating layer comprise a metal phosphate and a lithium compound, and the lithium compound comprises at least one of lithium carbonate, lithium hydroxide, lithium acetate, lithium nitrate, and lithium oxalate;
f: raw materials for preparing the phosphate compound of the second coating layer comprise hydrophosphate; and
g: raw materials for preparing the phosphate compound of the second coating layer comprise hydrophosphate, and the hydrophosphate comprises at least one of SrHPO₄, Zr(HPO₄)₂, MgHPO₄, and Al(H₂PO₄)₃.

5. The cathode material according to any one of claims 1 to 4, wherein the cathode material meets at least one of following conditions a to g:
a: a phosphate radical content of the phosphate compound in the first coating layer amounts to 0.03 wt% to 0.3 wt% of a total mass of the cathode material before primary coating;
b: a phosphate radical content of the phosphate compound in the second coating layer amounts to 0.1 wt% to 0.7 wt% of a total mass of the cathode material before secondary coating;
c: a content of crystallized phosphate radicals of the phosphate compound in the first coating layer or in the second coating layer amounts to 5 wt% to 50 wt% of a total mass of phosphate radicals;
d: the first coating layer has a thickness ranging from 0.005 µm to 0.05 µm;
e: the second coating layer has a thickness ranging from 0.02 µm to 0.2 µm;
f: the cathode material has a powder conductivity greater than 0.02 S/cm under a pressurization of 4 kN/cm²; and
g: the cathode material has a specific surface area ranging from 0.2 m²/g to 1.5 m²/g.

6. The cathode material according to any one of claims 1 to 5, wherein the cathode material meets at least one of following conditions a to b:
taking a mass of the cathode material as 100%, a phosphate radical content in the first coating layer ranges from 0.03 wt% to 0.3 wt%; and
taking a mass of the cathode material as 100%, a phosphate radical content in the second coating layer ranges from 0.3 wt% to 0.5 wt%.

7. A method for preparing a cathode material, wherein the method comprises following steps of:
performing a first sintering on a first mixture to obtain a first sinter material, wherein the first mixture comprises at least one of NiₓCo_{y}M_{z} oxide and NiₓCo_{y}M_{z} hydroxide, a lithium compound, and a metal phosphate, where x+y+z=1, M is selected from at least one of Mn or Al, the first sinter material comprises a plurality of primary particles and a first coating layer formed on a surface of the primary particles, and the first coating layer contains a phosphate compound; and
mixing the first sinter material with hydrophosphate to obtain a second mixture, and performing a secondary sintering on the second mixture so as to obtain a cathode material, wherein the cathode material comprises secondary particles and a second coating layer formed on a surface of the secondary particles, with the secondary particles comprising a plurality of accumulated primary particles and the second coating layer containing a phosphate compound.

8. The method according to claim 7, wherein the method meets at least one of following conditions a to g:
a: the lithium compound is added in an amount such that a ratio of a total molar content of Ni, Co, and M to a molar content of Li is 1: 0.95 to 1: 1.05;
b: the lithium compound comprises at least one of lithium carbonate, lithium hydroxide, lithium acetate, lithium nitrate, and lithium oxalate;
c: an average particle size of the metal phosphate is smaller than 0.5 µm;
d: a metallic element of the metal phosphate is selected from at least one of Co, Mn, Al, Ti, Zr, Sr, Mg, Y, Ba, Cu, W, Nb, La, Ce, Mo, and Sn;
e: the hydrophosphate comprises at least one of A₂HPO₄ and AH₂PO₄, wherein A is selected from at least one of Ni, Co, Mn, Al, Na, K, Ca, NH₄, Ti, Zr, Sr, Mg, Fe, Li, Y, Ba, Cu, W, Nb, La, Ce, Mo, and Sn;
f: a phosphate radical content in the metal phosphate amounts to 0.03 wt% to 0.3 wt% of a total mass of the first mixture; and
g: a phosphate radical content in the hydrophosphate amounts to 0.1 wt% to 0.7 wt% of a total mass of the second mixture.

9. The method according to claim 7 or 8, wherein the method meets at least one of following conditions a to i:
a: the metal phosphate comprises at least one of Mg₃(PO₄)₂, Sr₃(PO₄)₂, AlPO₄, and Zr₃(PO₄)₄;
b: the hydrophosphate comprises at least one of SrHPO₄, Zr(HPO₄)₂, MgHPO₄, and Al(H₂PO₄)₃;
c: the phosphate compound at least comprises at least one of Li₃PO₄ and LiNₖ(PO₄)ᵣ,where O<k≤2, 0<r≤2, and N is selected from at least one of Co, Mn, Al, Ti, Zr, Sr, Mg, Y, Ba, Cu, W, Nb, La, Ce, Mo, and Sn;
d: the phosphate compound comprises at least one of LiMgPO₄, LiSrPO₄, LiAlₖ(PO₄)ᵣ, LiCoₖ(PO₄)ᵣ, and LiZrₖ(PO₄)ᵣ;
e: a content of crystallized phosphate radicals of the phosphate compound in the first coating layer or in the second coating layer amounts to 5 wt% to 50 wt% of a total mass of phosphate radicals;
f: an average particle size of the primary particles ranges from 200 nm to 800 nm;
g: the first coating layer has a thickness ranging from 0.005 µm to 0.05 µm;
h: an average particle size of the secondary particles ranges from 9 µm to 15 µm; and
i: the second coating layer has a thickness ranging from 0.02 to 0.2 µm.

10. The method according to any one of claims 7 to 9, wherein the first mixture is prepared by using following method:
mixing at least one of the NiₓCo_{y}M_{z} oxide and the NiₓCo_{y}M_{z} hydroxide, the lithium compound, and the metal phosphate in a solid phase at 10°C to 50°C for 0.3 h to 2 h.

11. The method according to any one of claims 7 to 10, wherein the method meets at least one of following conditions a to d:
a: the first sintering is performed in an oxygen-containing atmosphere;
b: the first sintering is performed in an oxygen-containing atmosphere, and an oxygen content of the oxygen-containing atmosphere for the first sintering is greater than or equal to 95%;
c: a temperature for the first sintering ranges from 650°C to 850°C; and
d: the first sintering lasts for 6h to 20 h.

12. The method according to any one of claims 7 to 11, wherein the method meets at least one of following conditions a to f:
a: a temperature for mixing the first sinter material with the hydrophosphate ranges from 10°C to 50°C;
b: the mixing of the first sinter material with the hydrophosphate lasts for 0.3 h to 2 h;
c: the secondary sintering is performed in an oxygen-containing atmosphere;
d: the secondary sintering is performed in an oxygen-containing atmosphere, and an oxygen content of the oxygen-containing atmosphere for the secondary sintering is greater than or equal to 95%;
e: a temperature for the secondary sintering ranges from 400°C to 800°C; and
f: the secondary sintering lasts for 5 h to 10 h.

13. A lithium-ion secondary battery, **characterized by** comprising the cathode material according to any one of claims 1 to 6 or a cathode material prepared by the method for preparing a cathode material according to any one of claims 7 to 12.
